# EUROPEAN PATENT SPECIFICATION

(11) **EP 3 684 054 B1**
(45) Date of publication and mention of the grant of the patent: **19.04.2023**
(21) Application number: 19212965.8
(22) Date of filing: 02.12.2019
(51) Int. Cl.: H04N 9/31

(54) **PROJECTION APPARATUS AND MOBILE OBJECT**
PROJEKTIONSVORRICHTUNG UND MOBILES OBJEKT
APPAREIL DE PROJECTION ET OBJET MOBILE

(30) Priority: 17.01.2019 JP 2019005605
(43) Date of publication of application: 22.07.2020
(73) Proprietor: Ricoh Company, Ltd., Tokyo 143-8555 (JP)
(72) Inventor: NAKAMURA, Kento, Tokyo, 143-8555 (JP); ABE, Issei, Tokyo, 143-8555 (JP)
(74) Representative: J A Kemp LLP

(56) References cited:
- WO-A1-2018/225309
- US-A1- 2016 161 742
- US-A1- 2018 095 266

## Description

### BACKGROUND

### Technical Field

The embodiments of the present disclosure relate to a projection apparatus and a mobile object.

### Related Art

An image display apparatus is known that includes a correction optical system at a specified position between an intermediate-image display body and a projection optical system (see JP-2018-087900-A). The correction optical system is configured to correct light emitted from the intermediate-image display body. The image display apparatus forms a virtual image to be recognized by a viewer, based on an image projected onto a display area. The correction optical system is selectable according to the conditions of the display area.

There is a need to maintain the same relative positions of the image forming section and the image-forming system even when there is a change in the shape of the housing; and a mobile object incorporating such a projection apparatus.

WO 2018/225309 A1, US 2018/095266 A1 and US 2016/161742 A1 disclose background art to the invention.

### SUMMARY

In one aspect of this disclosure, there is provided an improved projection apparatus as defined by the claims.

In another aspect of this disclosure, there is provided an improved display system as defined by the claims.

In still another aspect of this disclosure, there is provided an improved mobile object as defined by the claims.

The embodiments of the present disclosure provide a projection apparatus capable of maintaining the same relative positions of the image forming section and the image-forming system even when there is a change in the shape of the housing; and a mobile object incorporating such a projection apparatus.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is an illustration of an example configuration of a display system according to an embodiment of the present disclosure;
FIG. 2 is a diagram illustrating an example of a configuration of a mounted apparatus according to an embodiment;
FIG. 3 is a top view of the mounted apparatus according to the embodiment;
FIG. 4 is a side view of the mounted apparatus according to the embodiment;
FIG. 5 is a side sectional view of the mounted apparatus according to the embodiment;
FIG. 6 is a top sectional view of the mounted apparatus according to the embodiment;
FIG. 7 is an illustration of an example of the configuration of a display device according to an embodiment;
FIG. 8 is an illustration for describing the action of attachment and detachment of a screen unit to and from the display device according to an embodiment;
FIG. 9 is a block diagram of a hardware configuration of the display device according to an embodiment;
FIG. 10 is a block diagram of a functional configuration of the display device according to an embodiment;
FIG. 11 is an illustration of a specific configuration of a light-source device according to an embodiment;
FIG. 12 is an illustration of a specific configuration of a light deflector according to an embodiment;
FIG. 13 is an illustration of an example of a specific configuration of a screen according to an embodiment;
FIGs. 14A and 14B are illustrations for describing a difference in action due to the difference in incident-light-beam diameter and lens diameter in a microlens array;
FIG. 15 is an illustration for describing the relation of a mirror and a scanning range of the light deflector;
FIG. 16 is an illustration of an example of the track of a scanning ling in two-dimensional scanning;
FIGs. 17A and 17B are illustrations of mounted apparatuses according to comparative examples;
FIG. 18 is an illustration of a mounted apparatus according to an embodiment of the present disclosure;
FIG. 19 is an illustration of an example of a mounted apparatus according to a variation of the embodiment;
FIG. 20 is an illustration of an example of a mounted apparatus according to another variation of the embodiment;
FIG. 21 is an illustration of virtual images formed by the mounted apparatus according to the comparative example; and
FIG. 22 is an illustration of virtual image formed by the mounted apparatus according to another variation in FIG. 20.

The embodiments of the present disclosure provide an optical system capable of substantially eliminating the influence of unwanted light while providing a compact optical path, an image projection apparatus incorporating the optical system, and a mobile object incorporating the optical system and the image projection apparatus.

### DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Embodiments of the present disclosure are described with reference to the drawings. In the description of the drawings, the same elements are denoted by the same reference numerals, and redundant description is omitted.

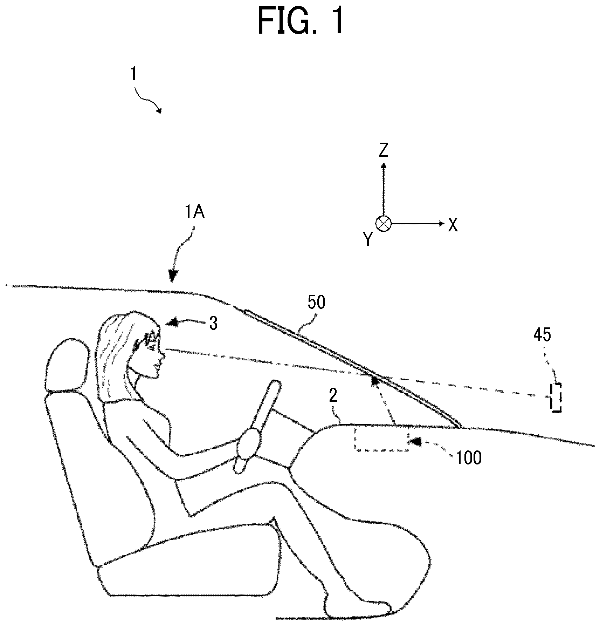

FIG. 1 is an illustration of an example of the configuration of a display system 1 according to an embodiment of the present disclosure.

In the display system 1, an observer 3 can visually identify a display image as the projection light projected from a mounted apparatus 100 (an example of a projection apparatus) is projected onto a transmissive reflector. The display image is an image superimposed on the viewing field of the viewer 3 as a virtual image 45. For example, the display system 1 is provided for a mobile object such as a vehicle, an aircraft, and a ship, or an immobile object such as a maneuvering simulation system, and a home-theater system. In the present embodiment, cases in which the display system 1 is provided on a vehicle as an example of a mobile object 1A is described. However, no limitation is intended thereby, and the type of usage of the display system 1 is not limited to the present embodiment. In the following description, X, Y, and Z (axes) of the coordinate axes denote the direction of travel of the mobile object 1A, the right-and-left directions, and the up-and-down directions left directions, respectively.

For example, the display system 1 makes navigation information visible to the observer 3 (i.e., the driver) through a windshield 50 of the vehicle. The navigation information includes, for example, the information about the speed of the vehicle, the course information, the distance to a destination, the name of the current place, the presence or position of an object ahead of the vehicle, a traffic sign indicating, for example, speed limit, and traffic congestion, and aids the driving of the vehicle. In such cases, the windshield 50 serves as a transmissive reflector that transmits a portion of the incident light and reflects at least some of the remaining incident light. The distance between the location of the eyepoint of the observer 3 and the windshield 50 is about several tens of centimeters (cm) to one meter (m). In some embodiments, the windshield 50 may be a combiner that serves as a transmissive reflector formed of, for example, a compact, transparent. and plastic disc.

The mounted apparatus 100 is, for example, a heads-up display (HUD). The mounted apparatus 100 according to the present embodiment is disposed at any desired position in accordance with the interior design of the vehicle. For example, the mounted apparatus 100 may be disposed under the dashboard of the vehicle or built into the dashboard 2 of the vehicle. In the present embodiment, the case where the mounted apparatus 100 is disposed inside the dashboard 2.

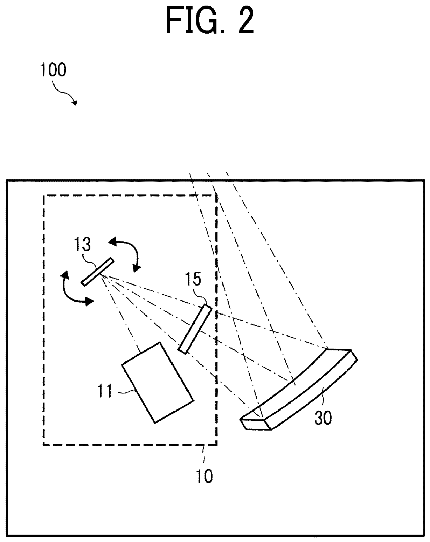

FIG. 2 is an illustration of an example of the configuration of a mounted apparatus 100 according to an embodiment. The mounted apparatus 100 includes a display device 10, a free-form surface mirror 30, and a windshield 50.

The display device 10 includes a light-source device 11, a light deflector 13, and a screen 15. The light-source device 11 is a device that emits the laser beams emitted from a light source outside the device. For example, the light-source device 11 may emit laser beams in which three-color laser beams of red, green, and blue (RGB) are combined. The laser beams that are emitted from the light-source device 11 are guided to the reflection plane of the light deflector 13. For example, the light-source device 11 has a semiconductor light-emitting element such as a laser diode (LD) that serves as a light source. However, no limitation is intended thereby, and the light source may be a semiconductor light-emitting element such as a light-emitting diode (LED).

The light deflector 13 is an example of an image forming section that receives light emitted from the light-source device 11 and emits image light for forming an image. The light deflector 13 changes a direction of travel of laser light using, for example, micro-electromechanical systems (MEMS). For example, the light deflector 13 is configured by a scanner such as a mirror system composed of one minute MEMS mirror that pivots around two axes orthogonal to each other or two MEMS mirrors that pivot or rotates around one axis. The laser beams emitted from the light deflector 13 scans the screen 15. The light deflector 13 is not limited to a MEMS mirror, but may be configured by a polygon mirror or the like.

The screen 15 is an example of a screen on which the image of the image light emitted from the light deflector 13 is formed. The screen 15 serves as a divergent part through which the scanned laser beams diverge at a predetermined divergence angle. For example, the screen 15 may consist of an exit pupil expander (EPE), and may be configured by a transmissive optical element such as a microlens array (MLA) or diffuser panel that diffuses light. Alternatively, the screen 15 may be configured by a reflective optical element such as a micromirror array that diffuses light. The screen 15 forms a two-dimensional intermediate image 40 on the screen 15 as the laser beams emitted from the light deflector 13 scan the surface of the screen 15.

A method of projecting an image using the display device 10 may be implemented by a panel system or a laser scanning system. In the panel system, the intermediate image 40 is formed by an imaging device such as a liquid crystal panel, a digital micromirror device (DMD) panel (digital mirror device panel), or a vacuum fluorescent display (VFD). In the laser scanning system, the intermediate image 40 is formed by scanning the laser beams emitted from the light-source device 11, using an optical scanner.

The display device 10 according to the present embodiment adopts the laser scanning system. In particular, in the laser scanning system, since emitting/non-emitting can be assigned to each pixel, in general, a high-contrast image can be formed. In some alternative embodiments, the panel system may be adopted as the projection system in the display device 10.

The virtual image 45 is projected onto the free-form surface mirror 30 and the windshield 50 as the intermediate image 40 that is formed by the laser beams (bundle of laser beams) emitted from the screen 15 is magnified for view. The free-form surface mirror 30 is designed and arranged so as to cancel, for example, the inclination of the image, the distortion of the image, and the displacements of the image, which are caused by the bent shape of the windshield 50. The free-form surface mirror 30 may be arranged in a pivotable manner around the rotation axis. Due to such a configuration, the free-form surface mirror 30 can adjust the reflection direction of the laser beams (bundle of laser beams) emitted from the screen 15 to change the position at which the virtual image 45 is displayed.

In the present embodiment, the free-form surface mirror 30 is designed using a commercially available optical design simulation software such that the free-form surface mirror 30 has a certain level of light-gathering power to achieve a desired image-forming position of the virtual image 45. In the display device 10, the light-gathering power of the free-form surface mirror 30 is designed such that the virtual image 45 is displayed at a position away from the location of the eyepoint of the observer 3 in the depth direction by, for example, at least 1 m and equal to or shorter than 30 m (preferably, equal to or shorter than 10 m). The free-form surface mirror 30 may be a concave mirror or an element with a light-gathering power. The free-form surface mirror 30 is an example of an image forming optical system.

The windshield 50 serves as a transmissive reflector that transmits some of the laser beams (bundle of laser beams) and reflects at least some of the remaining laser beams (partial reflection). The windshield 50 may serve as a semitransparent mirror through which the observer 3 visually recognizes the virtual image 45 and the scenery ahead of the mobile object (vehicle).

The virtual image 45 is an image that is visually recognized by the observer 3, including vehicle-related information (e.g., speed and travel distance), navigation information (e.g., route guidance and traffic information), and warning information (e.g., collision warning). For example, the transmissive reflector may be another windshield arranged in addition to the windshield 50. The windshield 50 is an example of a reflector.

The virtual image 45 may be displayed so as to be superimposed on the scenery ahead of the windshield 50. The windshield 50 is not flat but is curved. For this reason, the position at which the virtual image 45 is formed is determined by the curved surface of the free-form surface mirror 30 and the windshield 50. In some embodiments, the windshield 50 may be a semitransparent mirror (combiner) that serves as a separate transmissive reflector having a partial reflection function.

Due to such a configuration as above, the laser beams (bundle of laser beams) emitted from the screen 15 are projected towards the free-form surface mirror 30, and are reflected by the windshield 50. Accordingly, the observer 3 can visually recognize the virtual image 45, i.e., the magnified image of the intermediate image 40 formed on the screen 15, due to the light reflected by the windshield 50.

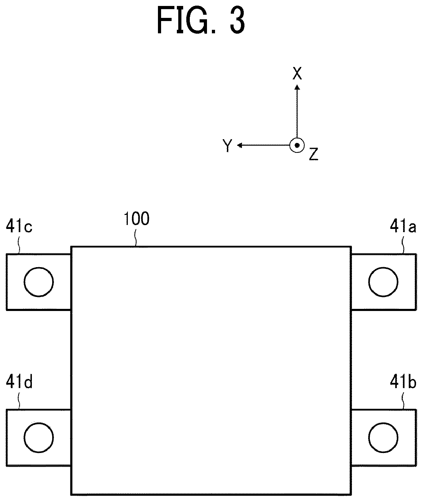

FIG. 3 is a top view of the mounted apparatus 100 according to the embodiment. As illustrated in FIG. 3, the mounted apparatus 100 has a right-side and a left-side surface each provided with two mounting sections 41a and 41b/41c and 41d for mounting the mounted apparatus 100 onto the mobile object 1A. Each of the mounting sections 41a to 41d is provided with a screw hole, and the mounted apparatus 100 is attached to the mobile object 1A through the screw hole.

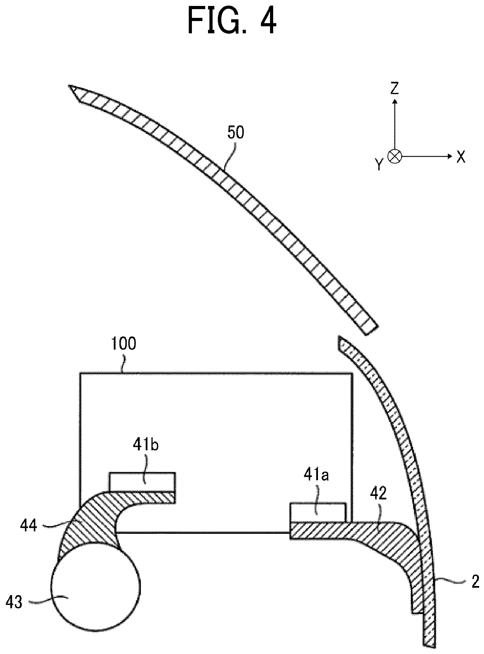

FIG. 4 is a side view of the mounted apparatus 100 attached to the mobile object 1A as viewed from the right side along the Y-axis. The mobile object 1A includes an instrument panel 2, to which a mounting bracket 42 is welded or fastened, and a cross car beam 43 to which a mounting bracket 44 is welded or fastened. The mounting bracket 42 and the mounting bracket 44 are an example of an installation part. The mounted apparatus 100 is attached to the mobile object 1A by screwing the mounting sections 41a and 41c into the mounting bracket 42 and by screwing the mounting sections 41b and 41d into the mounting bracket 44.

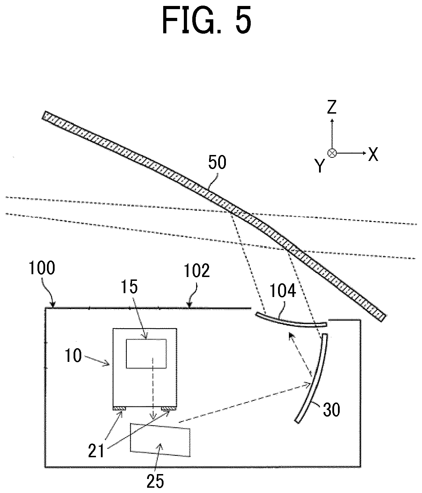

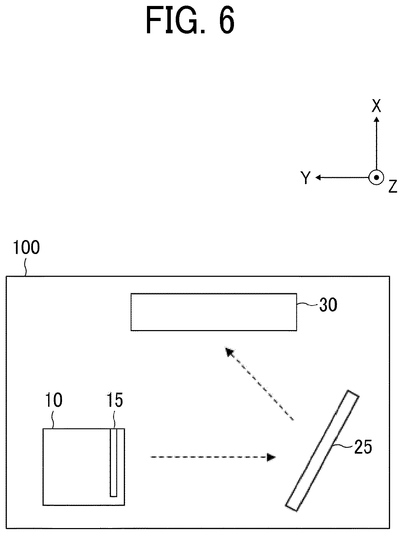

FIG. 5 is a side sectional view of the mounted apparatus 100 as viewed from the right side along the Y-axis (Y direction). FIG. 6 is a top sectional view of the mounted apparatus 100 as viewed from the upper direction along the Z-axis (direction). FIGs. 5 and 6 are illustrations of a specific arrangement of the components inside the mounted apparatus 100.

In addition to the display device 10 and the free-form surface mirror 30 described with reference to FIG. 2, the mounted apparatus 100 further includes a mirror 25 that reflects the laser light emitted from the display device 10 toward the free-form surface mirror 30, and also includes a housing 102. The housing 102 includes an exit window 104 as an example of a transmissive body that transmits the light reflected by the free-form surface mirror 30 and emits the reflected light onto the windshield 50. The display device 10 and the screen 15 are arranged so that laser light is projected in the right direction (right side in the Y direction).

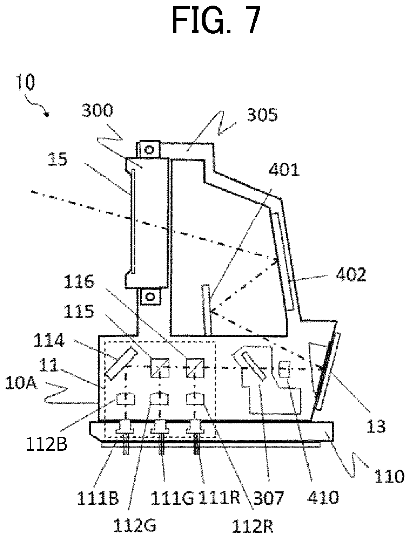

FIG. 7 is an illustration of an example of the configuration of the display device 10 according to an embodiment. In addition to the light-source device 11, the light deflector 13, and the screen 15 in FIG. 2, the display device 10 further includes a filter 307, a condenser lens 410, a mirror 401, and a second mirror 402. The filter 307 optically modulates the laser light emitted from the light-source device 11. The condenser lens 410 condenses the laser light modulated by the filter 307, toward the light deflector 13. The mirror 401 reflects the light deflected by the light deflector 13, and the second mirror 402 reflects the light reflected by the mirror 401 toward the screen 15.

The light-source device 11 includes light source elements 111R, 111G, and 111B (these light-source elements may be referred to simply as a light-source element 111 in the following description when it is not necessary to distinguish each of the light-source elements), coupling (collimator) lenses 112R, 112G, and 112B, apertures 113R, 113G, and 113B, combiners 114, 115, and 116, and a lens 117.

For example, each of the light-source elements 111 R, 111 G, and 111B of three colors (R, G, B) of three colors (red, green, and blue (RGB)) is a laser diode (LD) having a single or a plurality of light-emitting points. The light source elements 111R, 111G, and 111B emit bundles of laser beams (light flux) having different wavelengths λR, λG, and λB, respectively. For example, λR=640 nanometers (nm), λG=530 nm, and λB=445 nm.

The emitted bundles of laser beams (light flux) are coupled by the coupling lenses 112R, 112G, and 112B, respectively, thus traveling as substantially parallel light rays. The laser beams (light beams) that have been coupled by the coupling lenses 112R, 112G, and 112B are combined by the combiners 114, 115, and 116, respectively. The combiners 114, 115, and 116 are plate-like or prismatic dichroic mirrors, and reflect or transmit the laser beams (light flux) therethrough according to the wavelength of the laser beams to combine the laser beams into one bundle of laser beams (light flux) that travels along one optical path. The combined light flux passes through the filter 307 and the condenser lens 410 and is guided to the light deflector 13.

The display device 10 is an assembly of a housing 10A, a mirror unit (mirror holder) 305, and a screen unit 300. The housing 10A holds and houses the light source elements 111R, 111G, and 111B, the coupling lenses 112R, 112G, and 112B, the combiners 114, 115, and 116, the filter 307, the condenser lens 410, and the light deflector 13. The mirror unit 305 holds the mirror 401 and the second mirror 402. The screen unit 300 is an example of a holder that holds the screen 15.

The light source unit 110 is attachable to and removable from the housing 10A and holds the light source elements 111R, 111G, and 111B.

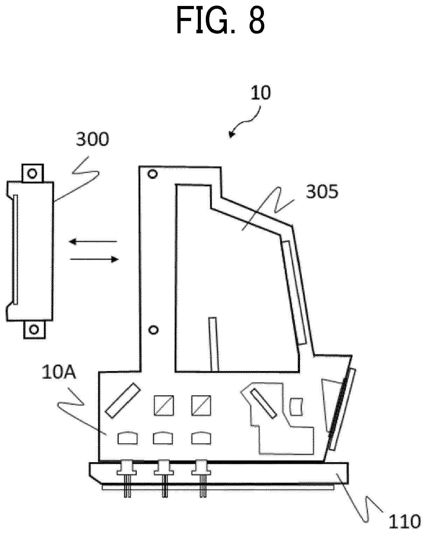

FIG. 8 is an illustration for describing the action of attachment and detachment of a screen unit 300 to and from the display device 10 according to an embodiment. The screen unit 300 is detachably attached to the housing 10A without removing the light source unit 110 and the mirror unit 305 from the housing 10A. The screen unit 300 is detachably attached to the housing 10A without removing the light-source device 11, the filter 307, the condenser lens 410, and the light deflector 13 from the housing 10A.

The housing 10A is molded by aluminum die casting, and the mirror unit 305 is molded by resin. The housing 10A has a higher thermal conductivity than the mirror unit 305 does.

The image light diverged by the screen 15 reaches the windshield 50 through the optical paths illustrated in FIGs. 1 and 2. In actual use, the sunlight irradiated on the windshield 50 might travel backward through the optical paths and reach the screen 15 or the screen unit 300. In this case, the screen 15 might be deformed or discolored by the heat of sunlight, and the image quality might be deteriorated.

In the present embodiment, the screen unit 300 is attached to the housing 10A. This configuration facilitates releasing of the heat of the screen 15 and the screen unit 300, and thus prevents a decrease in image quality as compared to the configuration in which the mirror unit 305 is disposed at a position upstream of the optical path.

Further, the screen unit 300 is detachably attachable to the housing 10A without removing the mirror 401, the second mirror 402, and the light deflector 13, which are held by the mirror unit 305, from the housing 10A. Accordingly, only the screen unit 300 can be exchanged with new one in performing maintenance. With such a configuration, even when the screen 15 is deformed or discolored, the screen 15 can be replaced with new one and the deterioration in image-quality can be prevented.

Further, the size, position, and angle of the screen 15 are finely adjusted according to those of the imaging-optical system (free-form surface mirror 30) due to a change in radius of curvature of the windshield 50 with the type (vehicle type) of the mobile object 1A. However, by detachably attaching the screen unit 300 to the housing 10A, the housing 10A can be commonly used, and thus productivity can be improved.

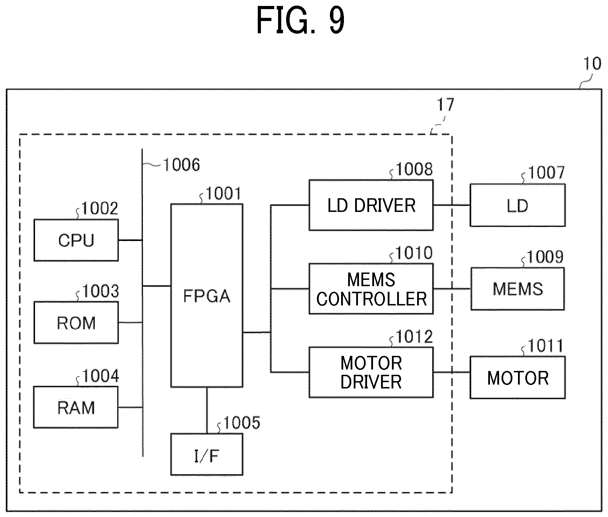

FIG. 9 is a block diagram of an example of the hardware configuration of the display device 10 according to an embodiment of the present disclosure. When necessary, some components or elements may be added to or deleted from the hardware configuration illustrated in FIG. 2.

The display device 10 includes a controller 17 that controls the operation of the display device 10. For example, the controller 17 is a circuit board or integrated circuit (IC) chip mounted inside the display device 10. The controller 17 includes a field-programmable gate array (FPGA) 1001, a central processing unit (CPU) 1002, a read only memory (ROM) 1003, a random access memory (RAM) 1004, an interface (I/F) 1005, a data bus line 1006, a laser diode (LD) driver 1008, a micro-electromechanical systems (MEMS) controller 1010, and a motor driver 1012.

The FPGA 1001 is an integrated circuit that is configurable by the designer of the display device 10. The LD driver 1008, the MEMS controller 1010, and the motor driver 1012 generate a driving signal according to the control signal output from the FPGA 1001. The CPU 1002 is an integrated circuit that controls the entirety of the display device 10. The ROM 1003 is a storage device that stores a program for controlling the CPU 1002. The RAM 1004 is a storage device that serves as a work area of the CPU 1002. The interface 1005 communicates with an external device. For example, the interface 1005 is coupled to the controller area network (CAN) of a vehicle.

For example, the LD 1007 is a semiconductor light-emitting element that configures a part of the light-source device 11. The LD driver 1008 is a circuit that generates a driving signal for driving the LD 1007. The MEMS 1009 configures a part of the light deflector 13 and moves the scanning mirror. The MEMS controller 1010 is a circuit that generates a driving signal for driving the MEMS 1009. The motor 1011 is an electric motor that rotates the rotation axis of the free-form surface mirror 30. The motor driver 1012 is a circuit that generates a driving signal for driving the motor 1011.

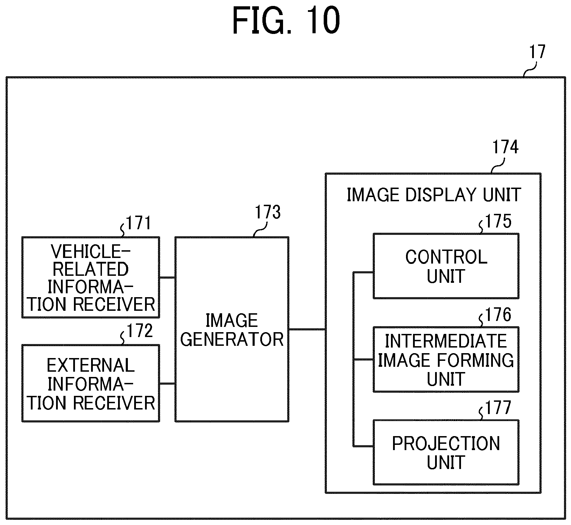

FIG. 10 is a block diagram of the functional configuration of the display device according to an embodiment. The functions that are implemented by the display device 10 include a vehicle-related information receiver 171, an external information receiver 172, an image generator 173, and an image display unit 174.

The vehicle-related information receiver 171 is a function to receive vehicle-related information (e.g., speed and travel distance) from a controller area network (CAN) or the like. For example, the vehicle-related information receiver 171 is implemented by some of the elements illustrated in FIG. 2. In particular, the vehicle-related information receiver 171 may be implemented by the interface 1005, the processing performed by the CPU 1002, and a program stored in the ROM 1003.

The external information receiver 172 receives external information (for example, position information from the global positioning system (GPS), routing information from a navigation system, and traffic information) of the vehicle from an external network. For example, the external information receiver 172 is implemented by some of the elements illustrated in FIG. 2. In particular, the external information receiver 172 may be implemented by the interface 1005, the processing performed by the CPU 1002, and a program stored in the ROM 1003.

The image generator 173 is a function to generate image data, which is used to display the intermediate image 40 and the virtual image 45, based on the data input from the vehicle-related information receiver 171 and the external information receiver 172. For example, the image generator 173 is implemented by some of the elements illustrated in FIG. 2. In particular, the image generator 173 may be implemented by the processing performed by the CPU 1002, and a program stored in the ROM 1003.

The image display unit 174 is a function to form the intermediate image 40 on the screen 15 based on the image data generated by the image generator 173, and to project the laser beams (bundle of laser beams) that form the intermediate image 40 towards the windshield 50 to display the virtual image 45. For example, the image display unit 174 is implemented by some of the elements illustrated in FIG. 2. In particular, the image display unit 174 may be implemented by the processing performed by the CPU 1002, the FPGA 1001, the LD driver 1008, the MEMS controller 1010, and the motor driver 1012, as well as a program stored in the ROM 1003.

The image display unit 174 includes a control unit 175, an intermediate image forming unit 176, and a projection unit 177. In order to form the intermediate image 40, the control unit 175 generates a control signal used to control the operation of the light-source device 11 and the light deflector 13. Moreover, the control unit 175 generates a control signal that controls the operation of the free-form surface mirror 30 to display the virtual image 45 at a desired position.

The intermediate image forming unit 176 forms an intermediate image 40 on the screen 15 based on the control signal generated by the control unit 175. The projection unit 177 projects the laser beams that form the intermediate image 40 towards the transmissive reflector (e.g., the windshield 50) in order to form the virtual image 45 to be visually recognized by the observer 3.

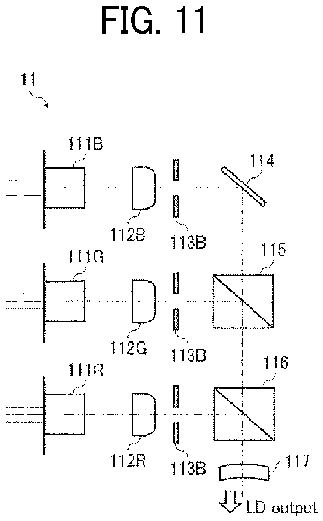

FIG. 11 is an illustration of a specific configuration of a light-source device 11 according to an embodiment. In addition to the configuration described with reference to FIG. 7, the light-source device 11 further includes apertures 113R, 113G, and 113B between a group of coupling lenses 112R, 112G, and 112B and a group of combiners 114, 115, and 116. The apertures 113R, 113G, and 113B shape laser beams (light beams) coupled by the coupling lenses 112R, 112G, and 112B, respectively. The shape of the apertures 113R, 113G, and 113B may be various kinds of shape such as a circle, an ellipse, a rectangle, and a square depending on, for example, certain predetermined conditions such as the divergence angle of the bundles of laser beams (light flux).

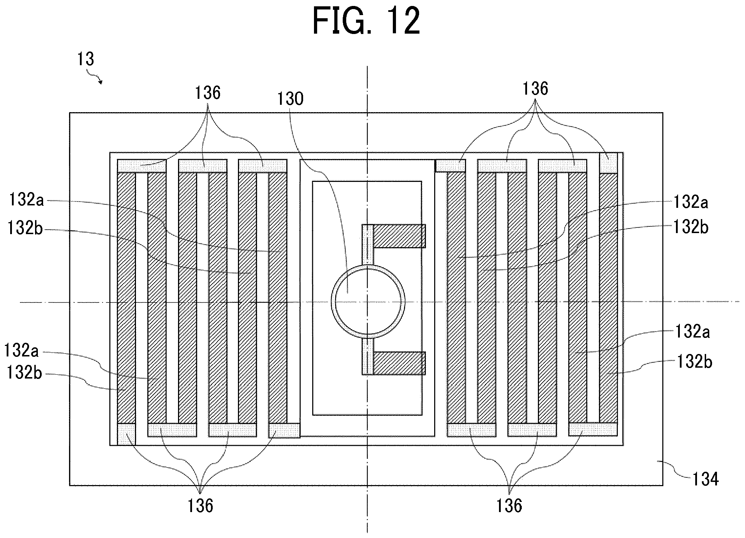

FIG. 12 is an illustration of a specific configuration of a light deflector according to an embodiment. The light deflector 13 is a MEMS mirror produced by semiconductor processing, and includes a mirror 130, a serpentine beam 132, a frame 134, and a piezoelectric member 136. The light deflector 13 is an example of a scanner.

The mirror 130 has a reflection plane that reflects the laser beams emitted from the light-source device 11 towards the screen 15 side. In the light deflector 13, a pair of serpentine beams 132 are formed across the mirror 130. Each of the pair of serpentine beams 132 has a plurality of turning portions. Each of these turning portions is configured by a first beam 132a and a second beam 132b that are arranged alternately. Each of the pair of serpentine beams 132 is supported by the frame 134. The piezoelectric member 136 is disposed such that the first beam 132a and the second beam 132b, which are adjacent to each other, are coupled to each other. The piezoelectric member 136 applies different levels of voltage to the first beam 132a and the second beam 132b to bend each of the first beam 132a and the second beam 132b differently.

As a result, the first beam 132a and the second beam 132b, which are adjacent to each other, bend in different directions. As the bending force is accumulated, the mirror 130 rotates in the vertical direction around the horizontal axis. Due to such a configuration as above, the light deflector 13 can perform optical scanning in the vertical direction at a low voltage. An optical scanning in the horizontal direction around the axis in the vertical direction is implemented by the resonance produced by a torsion bar or the like coupled to the mirror 130.

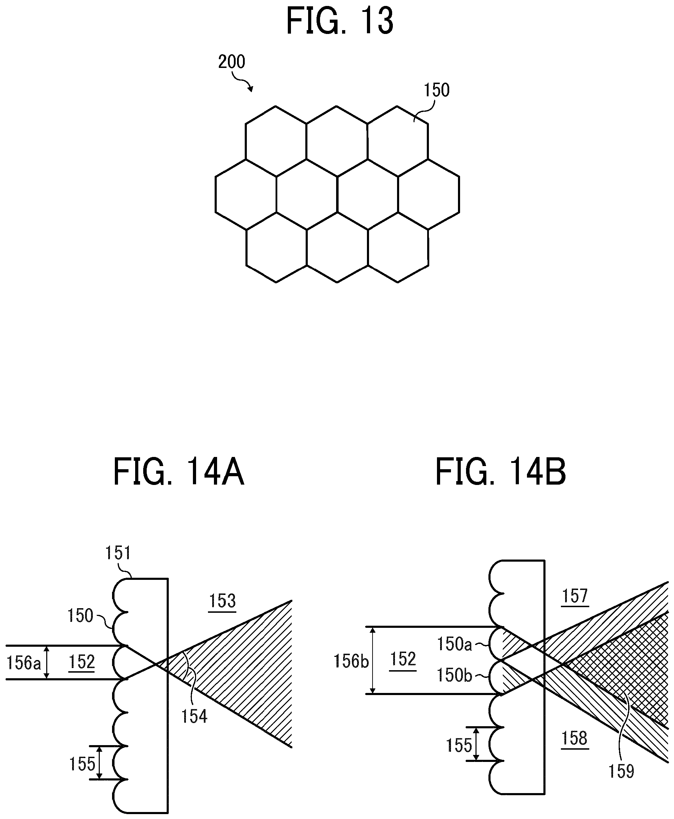

FIG. 13 is an illustration of an example of a specific configuration of a screen according to an embodiment. The laser beams emitted from the LD 1007 that configures a part of the light-source device 11 on the screen 15. The screen 15 serves as a divergent part that diverges the laser beams at a predetermined divergence angle.

As an example configuration in which a plurality of curved portions through which the light diverges are provided, the screen 15 as illustrated in FIG. 13 has a microlens-array structure in which a plurality of hexagonal-shaped microlenses 150 (a convex portion as an example of the curved portion) are arranged with no gap therebetween. The microlenses 150 are an example of the curved portion. The lens diameter of each one of the microlenses 150 (the distance between two sides that are opposed to each other) is about 200 micrometers (µm).

As the microlenses 150 of the screen 15 have a hexagonal shape, the multiple microlenses 150 can be arrayed with high density. The microlens array 200 and the microlenses 150 according to the present embodiment will be described later in detail.

FIGs. 14A and 14B are illustrations for describing a difference in action due to the difference in incident-light-beam diameter and lens diameter in a microlens array. As illustrated in FIG. 14A, the screen 15 is configured by an optical plate 151 in which the multiple microlenses 150 are neatly arranged. When an incident light 152 is scanned on the optical plate 151, the incident light 152 diverges as passing through the microlenses 150, and the incident light 152 becomes a diverging light 153. Due to the structure of the microlenses 150, the screen 15 can disperse the incident light 152 at a desired divergence angle 154. The Lens diameter 155 at which the microlenses 150 are arranged is designed to be wider than the diameter 156a of the incident light 152. Accordingly, the screen 15 does not cause interference among the lenses, and interfering noise can be prevented from occurring.

FIG. 14B is a diagram illustrating the optical paths of diverging light beams when the diameter 156b of the incident light 152 is twice wider than the lens diameter 155 at which the microlenses 150 are arranged. The incident light 152 is incident on two microlenses 150a and 150b, and these two microlenses 150a and 150b produce two diverging lights 157 and 158, respectively. In such cases, lights may interfere with each other as two diverging lights exist in an area 159. Such an interference between two diverging lights (coherent light) is visually recognized as an interfering noise by an observer.

In view of the above circumstances, the lens diameter 155 at which the microlenses 150 are arranged is designed to be wider than the diameter 156 of the incident light 152 in order to reduce the interfering noise. A configuration with convex lenses is described above with reference to FIGs. 14A and 14B. However, no limitation is indicated thereby, and advantageous effects can be expected in a similar manner in a configuration with concave lenses.

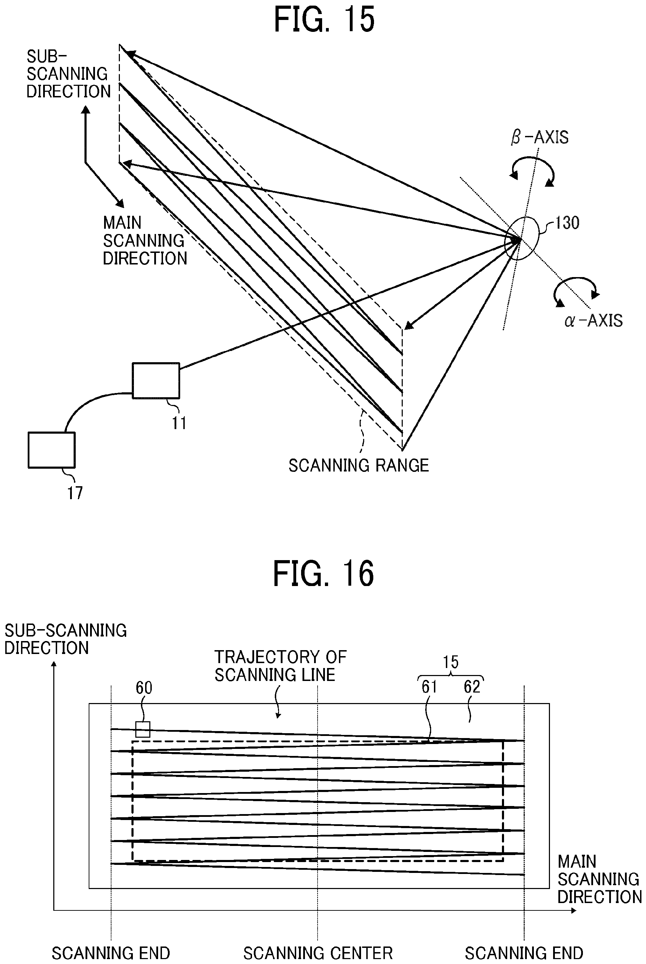

FIG. 15 is an illustration for describing the relation of a mirror and a scanning range of the light deflector. The FPGA 1001 controls the light-emission intensity, the timing of light emission, and the light waveform of the multiple light-source elements in the light-source device 11. The LD driver 1008 drives the multiple light-source elements of the light-source device 11 to emit laser beams. As illustrated in FIG. 15, the laser beams that are emitted from the multiple light-source elements and whose optical paths are combined are two-dimensionally deflected about the α axis and the β axis by the mirror 130 of the light deflector 13, and the screen 15 is irradiated with the laser beams deflected by the mirror 130, which serve as scanning beams. In other words, the screen 15 is two-dimensionally scanned by main scanning and sub-scanning by the light deflector 13.

In the present embodiment, the entire area to be scanned by the light deflector 13 may be referred to as a scanning range. The scanning light scans (two-way scans) a scanning range of the screen 15 in a vibrating manner along the main scanning direction at a high frequency of approximately from 20,000 to 40,000 hertz (Hz), and one-way scans the scanning range in the sub-scanning direction at a low frequency of approximately a few tens of Hz. In other words, the light deflector 13 performs raster scanning on the screen 15. In this configuration, the display device 10 controls the light emission of the multiple light-source elements according to the scanning position (the position of the scanning beam). Accordingly, an image can be drawn on a pixel-by-pixel basis and a virtual image can be displayed.

The length of time to write an image in one frame, that is, the length of time for scanning one frame (one cycle of two-dimensional scanning), is a few tens of millisecond (msec), determined by the above-described frequency of a few tens of Hz for the sub-scanning direction (sub-scanning frequency). For example, assuming that the main-scanning cycle and the sub-scanning cycle are 20,000 Hz and 50 Hz, respectively, the length of time to scan one frame is 20 msec.

FIG. 16 is an illustration of an example of a trajectory of a scanning line when two-dimensional scanning is performed, according to an embodiment of the present disclosure. As illustrated in FIG. 16, the screen 15 includes an image area 61 (i.e., an effective scanning area) and a frame area 62 that surrounds the image area 61. The image area 61 is irradiated with the light that is modulated according to the image data, and the intermediate image 40 is drawn on the image area 61.

In the present embodiment, the scanning range includes the image area 61 and a part of the frame area 62 (i.e., a portion around the periphery of the image area 61) on the screen 15. In FIG. 16, the trajectory of the scanning line in the scanning range is indicated by a zigzag line. For the sake of explanatory convenience, the number of scanning lines in FIG. 16 is less than the actual number of scanning lines.

As described above, the screen 15 is configured by a transmissive optical element such as the microlens array 200 that diffuses light. In the present embodiment, the shape of the image area 61 is rectangular or planar. However, no limitation is intended thereby, and the shape of the image area 61 may be polygonal or curved. Further, in some embodiments, the screen 15 may be a reflective optical element such as a micromirror array that diffuses light, depending on the design or layout of the display device 10. In the following description of the present embodiment, it is assumed that the screen 15 is configured by the microlens array 200.

The screen 15 is provided with a synchronous detection system 60 that includes a light receiver disposed at the edges of the image area 61 (a part of the frame area 62) in the scanning range. In FIG. 16, the synchronous detection system 60 is disposed on the -X and +Y side of the image area 61. More specifically, the synchronous detection system 60 is disposed at a corner on the +Y side. The synchronous detection system 60 detects the operation of the light deflector 13 and outputs, to the FPGA 1001, a synchronizing signal that determines the start timing of scanning or the end timing of scanning.

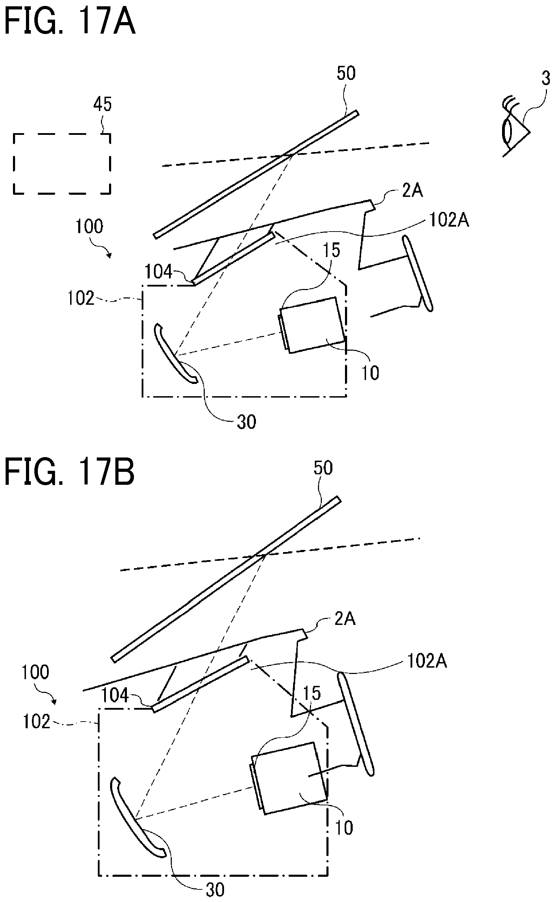

FIGs. 17A and 17B are illustrations of mounted apparatuses 100 according to comparative examples.

Same as in FIG. 5, the mounted apparatus 100 includes the display device 10 provided with the screen 15 and the free-form surface mirror 30 within the housing 102 having the exit window 104. The housing 102 has an opening 102A that transmits light reflected by the free-form surface mirror 30. The exit window 104 is made of resin material, and is disposed on the housing 102 to cover the opening 102A.

FIG. 17A is an illustration of the state at which the mounted apparatus 100 is mounted on the mobile object 1A of a vehicle type A. In FIG. 17A, the internal structure of the dashboard 2A including, for example, a wall surface and vehicle components is illustrated. In this case, the housing 102 is disposed without interfering with the internal structure 2A.

FIG. 17B is an illustration of the state at which the mounted apparatus 100 is mounted on the mobile object 1A of a vehicle type B. The internal structure 2A in FIG. 17B has a different shape than FIG. 17A does. If the mounted apparatus 100 has the internal structure 2A of the same shape as in FIG. 17A, the housing 102 adversely interferes with the internal structure 2A as illustrated in FIG. 17B. That is, the housing 102 of the same shape as in FIG. 17A is not available in the mobile object of the vehicle type B.

In view of such a situation, the housing 102 for the vehicle type B is designed to have the different shape from that of the housing 102 in FIG. 17A. However, in such a case, there is a need to rearrange the display device 10 and the free-form surface mirror 30 according to the shape of the housing 102, which requires starting optical designing from scratch.

In the case of the mounted apparatus 100 according to the comparative example, the mounted apparatus 100 is optically designed with each change in the shape of the housing 102, which increases the number of man-hours for optical design as the number of vehicle types increases.

In order to avoid such a situation, in the mounted apparatus 100 according to the embodiments of the present disclosure, the relative position of the display device 10 and the free-form surface mirror 30 is made the same even the shape of the housing changes with the vehicle type. This prevents an increase in the number of man-hours for optical design as the number of vehicle types increases.

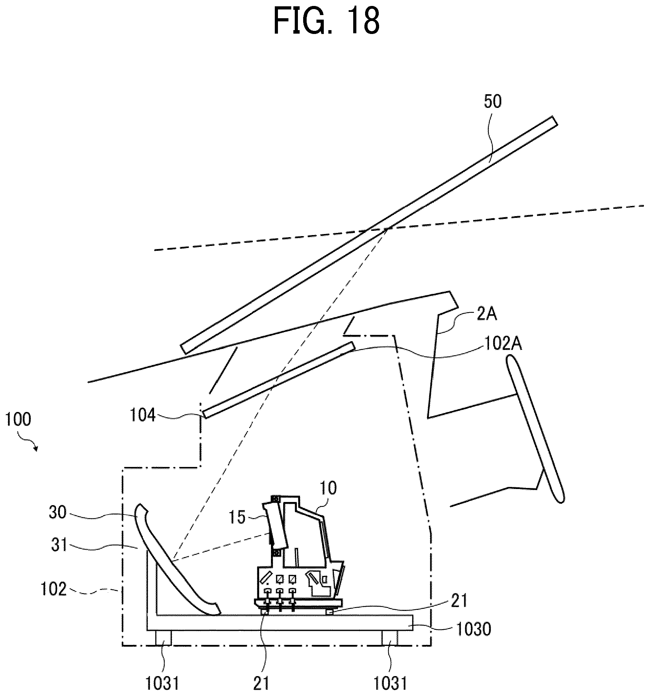

FIG. 18 is an illustration of the mounted apparatus 100 according to an embodiment of the present disclosure.

In addition to the configuration in FIGs. 17A and 17B, the mounted apparatus 100 in FIG. 18 further includes a positioner 1030 that positions and holds the display device 10 and the free-form surface mirror 30.

As illustrated in FIG. 7, the display device 10 includes the screen 15, the light deflector 13, and the light-source device 11, which means that the positioner 1030 also positions and holds the screen 15, the light deflector 13, and the light-source device 11.

The positioner 1030 includes attaching parts 1031 for attaching the positioner 1030 to the housing 120, holders 21 for positioning and holding the display device 10, and a mirror holder 31 for positioning and holding the free-form surface mirror 30.

With this configuration, the free-form surface mirror 30 is detachable from the positioner 1030 without a change in the relative positions of the screen 15, the light deflector 13, and the light-source device 11 of the display device 10.

The exit window 104 is made of resin material, and is disposed on the housing 102 to cover the opening 102A. However, no limitation is intended therein. Alternatively, the exit window 104 may be disposed on the dashboard 2 so as to cover the opening 102A.

With the above-described configuration, using the positioner 1030 enables the same relative positions of the free-form surface mirror 30, the screen 15, the light deflector 13, and the light-source device 11 to be commonly applied even with a change in the shape of the housing 102 according to the vehicle type. This prevents an increase in the number of man-hours for optical design with an increase in the number of vehicle types.

The relative positions of the free-form surface mirror 30, the screen 15, the light deflector 13, and the light-source device 11 with respect to the positioner 1030 are preliminarily designed so that the mounted apparatus 100 can fit into any shape of plural vehicle types of a plurality of housings 102 on which the mounted apparatus 100 is to be mounted.

Although it is desirable that no change is made in the relative positions of the free-form surface mirror 30, the screen 15, the light deflector 13, and the light-source device 11 for each vehicle type, there are some cases in which the relative positions of these components have to be changed for a certain vehicle type.

In such cases, however, in the embodiments of the present disclosure, the free-form surface mirror 30 is detachable from the positioner 1030 without a change in the relative positions of the screen 15, the light deflector 13, and the light-source device 10 of the display device 10. Accordingly, in the embodiments of the present disclosure, only the free-form surface mirror 30 can be replaced without changing the optical design of the screen 15, the light deflector 13, and the light-source device 11. With this configuration, an increase in the number of man-hours for optical design with an increase in the number of vehicle types can be prevented.

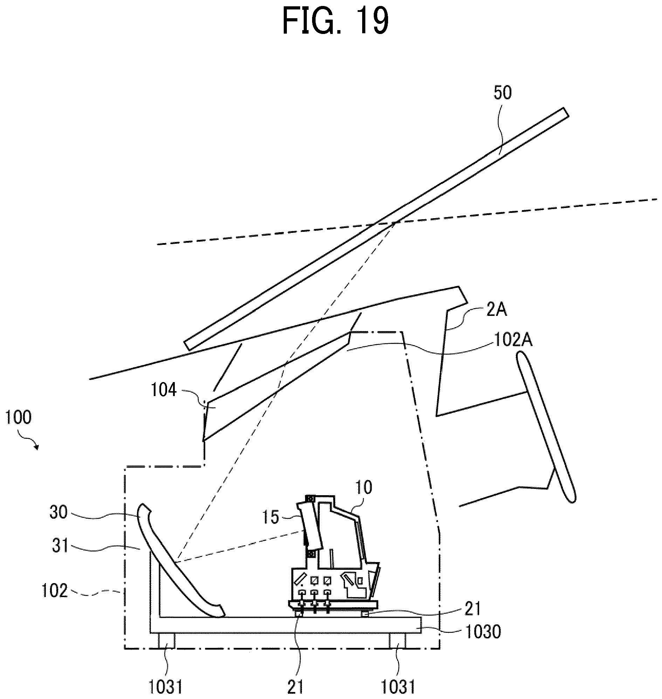

FIG. 19 is an illustration of a mounted apparatus 100 according to a variation of the embodiment in FIG. 18.

When there is a change in the shape of the housing 102 with the vehicle type, the relative positions of the free-form surface mirror 30 and the windshield 50 might change.

In view of such a situation, the exit window 104 of the mounted apparatus 100 according to the present variation has a different configuration than the exit window 104 in FIG. 18 does. The exit window 104 according to the present variation has a portion where the distance between the outside surface and the inside surface is different from other portions in an area that transmits the image light reflected by the free-form surface mirror 30. The distance between the outside surface and the inside surface is a thickness of the exit window 104, which refers to the length of a straight line that extends from the outside surface to the inside surface along the direction of the normal to the outside surface.

With this configuration, the optical path of the image light that passes through the exit window 104 is changed to correct the change in the relative positions of the free-form surface mirror 30 and the windshield 50 that occurs according to the vehicle type. Accordingly, the image light can be projected onto an appropriate position of the windshield 50 by changing the shape of the exit window 104. Thus, an increase in the number of man-hours for optical design with an increase in the number of vehicle types can be prevented.

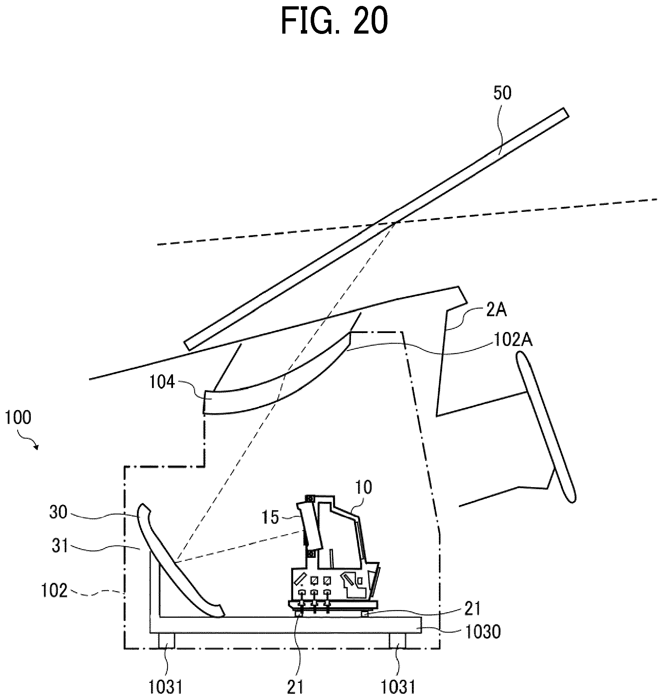

FIG. 20 is an illustration of a mounted apparatus 100 according to another variation of the embodiment in FIG. 18.

In the present variation, the exit window 104 has a portion where the distance between the outside surface and the inside surface is different from other portions in an area that transmits the image light reflected by the free-form surface mirror 30 in the same manner as in the configuration of FIG. 19. A part of the inside surface of the exit window 104 according to the present variation is convex downward (the lower side of the exit window 104 in FIG. 20).

This configuration prevents sunlight that has passed through the windshield 50 and has entered the mobile object 1A and the exit window 104 from being reflected back to the windshield 50. Further, such a configuration can prevent a decrease in the viewability of a virtual image 45 by an observer 3 due to sunlight.

That is, sunlight passes through the windshield 50 into the mobile object 1A and enters the exit window 104. Part of the sunlight that has entered the exit window 104 is reflected back to the windshield 50. The part of the sunlight that has been back to the windshield 50 is partly reflected by the windshield 50 toward the observer 3. The sunlight visually recognized by the observer 3 exists in the vicinity of the virtual image 45, which hampers the observer 3 from visually recognizing the virtual image 45 well. Such an issue is substantially prevented by the configuration according to the present variation.

Further, the exit window 104 according to the present variation partly has a free-form surface shape in a part of the inside surface (the lower side of the exit window 104 in FIG. 20). This configuration enables the aberration of the virtual image 45 visually recognized by the observer 3 to be effectively corrected.

In other words, when the light rays for forming the image light that reaches each viewpoint in the region, at which the viewpoints of the observer 3 exist, disperse in a direction perpendicular to the optical axis of the image light on the exit window 104, such an aberration of each light ray can be corrected with the thickness of the exit window 104.

The exit window 104, which is made of resin, is capable of correcting the aberrations at a higher accuracy and lower cost than other methods.

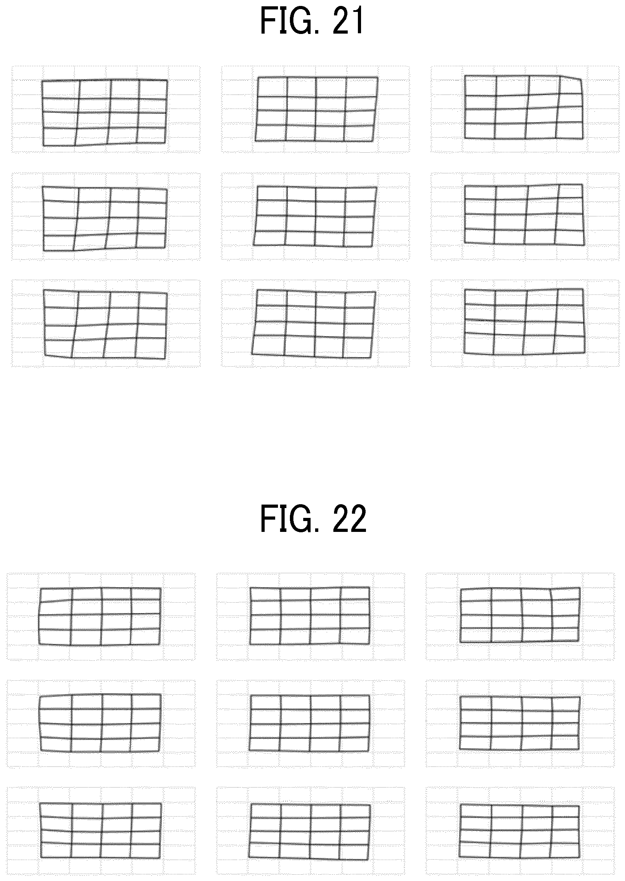

FIG. 21 is an illustration of virtual images 45 formed by the mounted apparatus according to the comparative example. Specifically, the virtual images 45 of distorted shapes to be virtually recognized by the observer 3 in the case of the exit window 104 on the inside surface of which the free-form surface shape is not adopted are indicated.

Each of the nine lattice shapes is included in the region where the viewpoints of the observer 3 exists. The lattice at the upper left refers to the distorted shape of the virtual image 45 visually recognized when the viewpoint of the observer 3 is at the upper left, the lattice in the upper intermediate position refers to the distorted shape of the virtual image 45 visually recognized when the viewpoint of the observer 3 is at the upper intermediate position, and the lattice at the upper right refers to the distorted shape of the virtual image 45 visually recognized when the viewpoint of the observer 3 is at the upper right. The lattice at the intermediate left refers to the distorted shape of the virtual image 45 visually recognized when the viewpoint of the observer 3 is at the intermediate left, the lattice at the center refers to the distorted shape of the virtual image visually recognized when the viewpoint of the observer 3 is at the center, and the lattice at the intermediate right refers to the distorted shape of the virtual image 45 visually recognized when the viewpoint of the observer 3 is at the intermediate right. The lattice at the lower left refers to the distorted shape of the virtual image 45 visually recognized when the viewpoint of the observer 3 is at the lower left, the lattice in the lower intermediate position refers to the distorted shape of the virtual image 45 visually recognized when the viewpoint of the observer 3 is in the lower intermediate position, and the lattice at the lower right refers to the distorted shape of the virtual image 45 visually recognized when the viewpoint of the observer 3 is at the lower right.

In the comparative example, the virtual images 45 of significantly distorted shapes are displayed such that the distortion aberrations of these virtual images 45 are not corrected within the area at which the viewpoints of the observer 3 are present.

FIG. 22 is an illustration of virtual images 45 formed by the mounted apparatus 100 according to another variation of the embodiment in FIG. 20. Specifically, the virtual images 45 of distorted shapes to be virtually recognized by the observer 3 in the case of the exit window 104 on the inside surface of which the free-form surface shape is adopted are indicated.

Each of the nine lattice shapes is included in the region where the viewpoints of the observer 3 exists. The lattice at the upper left refers to the distorted shape of the virtual image 45 visually recognized when the viewpoint of the observer 3 is at the upper left, the lattice in the upper intermediate position refers to the distorted shape of the virtual image 45 visually recognized when the viewpoint of the observer 3 is at the upper intermediate position, and the lattice at the upper right refers to the distorted shape of the virtual image 45 visually recognized when the viewpoint of the observer 3 is at the upper right. The lattice at the intermediate left refers to the distorted shape of the virtual image 45 visually recognized when the viewpoint of the observer 3 is at the intermediate left, the lattice at the center refers to the distorted shape of the virtual image visually recognized when the viewpoint of the observer 3 is at the center, and the lattice at the intermediate right refers to the distorted shape of the virtual image 45 visually recognized when the viewpoint of the observer 3 is at the intermediate right. The lattice at the lower left refers to the distorted shape of the virtual image 45 visually recognized when the viewpoint of the observer 3 is at the lower left, the lattice in the lower intermediate position refers to the distorted shape of the virtual image 45 visually recognized when the viewpoint of the observer 3 is in the lower intermediate position, and the lattice at the lower right refers to the distorted shape of the virtual image 45 visually recognized when the viewpoint of the observer 3 is at the lower right.

In this variation, distortion aberrations of the virtual images are corrected between the viewpoints of the region where the viewpoint of the observer 3 exists and the display quality of the virtual image 45 is improved as compared with the comparative example in FIG. 21.

Numerous additional modifications and variations are possible in light of the above teachings. It is therefore to be understood that within the scope of the appended claims, the disclosure of the present disclosure may be practiced otherwise than as specifically described herein. For example, elements and/or features of different illustrative embodiments may be combined with each other and/or substituted for each other within the scope of this disclosure and appended claims.

## Claims

1. A projection apparatus (100), configured to be disposed inside a dashboard, the projection apparatus (100) comprising:
a display device (10) including:
a light source (11) configured to emit light;
an image forming section (13) configured to receive the light emitted from the light source and emit the light to form an image; and
an optical element (200) configured to diverge the light emitted from the image forming section (13); and
a free-form surface mirror (30) configured to receive the diverged light, and to reflect the diverged light of the image and form another image; and
a housing (102) configured to house the display device (10) and the free-form surface mirror (30), and to emit the light reflected by the free-form surface mirror (30); **characterized in that** the projection apparatus (100) further comprises:
a positioner (1030) attached to the housing (102), the positioner (1030) being configured to position and hold each of the display device (10) and the free-form surface mirror (30), wherein
the positioner (1030) comprises holders (21) for positioning and holding the display device (10) and a mirror holder (31) for positioning and holding the free-form surface mirror (30), such that the free-form surface mirror (30) is detachable from the positioner (1030) without a change in relative positions of the image-forming section (13), the light source (11), and the optical element (200).

2. The projection apparatus (100) according to claim 1, further comprising a transmissive body (104) disposed to cover an opening of the housing (102) so as to transmit the light reflected by the free-form surface mirror (30).

3. The projection apparatus (100) according to claim 2,
wherein, in the transmissive body (104), a distance between an outside surface and an inside surface differs between one portion and another portion within an area that transmits the light reflected by the free-form surface mirror (30).

4. The projection apparatus (100) according to claim 2 or 3,
wherein a part of an inside surface of the transmissive body (104) is convex downward.

5. The projection apparatus (100) according to claim 3 or 4,
wherein a part of an inside surface of the transmissive body (104) has a free-form shape.

6. the projection apparatus (100) according to any one of claims 2 to 5,
wherein the transmissive body (104) is made of resin material.

7. A display system (11) comprising:
the projection apparatus (100) according to any one of claims 1 to 6; and
a reflector (50) configured to reflect the light reflected by the free-form surface mirror (30),
wherein the free-form surface mirror (30) is configured to emit the light and form a virtual image of the light on the reflector (50).

8. A mobile object (1A) comprising the display system (1) according to claim 7,
wherein the reflector (50) is a windshield that reflects the light reflected by the free-form surface mirror (30).

## Patentansprüche

1. Projektionsvorrichtung (100), die dafür konfiguriert ist, im Inneren eines Armaturenbretts angeordnet zu werden , wobei die Projektionsvorrichtung (100) Folgendes umfasst:
eine Anzeigevorrichtung (10), die Folgendes umfasst:
eine Lichtquelle (11), die dafür konfiguriert ist, Licht zu emittieren;
einen Bilderzeugungsabschnitt (13), der dafür konfiguriert ist, das von der Lichtquelle emittierte Licht zu empfangen und das Licht zu emittieren, um ein Bild zu erzeugen; und
ein optisches Element (200), das dafür konfiguriert ist, das von dem Bilderzeugungsabschnitt (13) emittierte Licht abzulenken; und
einen Freiform-Oberflächenspiegel (30), der dafür konfiguriert ist, das abgelenkte Licht zu empfangen und das abgelenkte Licht des Bildes zu reflektieren und ein weiteres Bild zu erzeugen; und
ein Gehäuse (102), das dafür konfiguriert ist, die Anzeigevorrichtung (10) und den Freiform-Oberflächenspiegel (30) aufzunehmen und das von dem Freiform-Oberflächenspiegel (30) reflektierte Licht auszustrahlen; **dadurch gekennzeichnet, dass** die Projektionsvorrichtung (100) ferner Folgendes umfasst:
einen Positionierer (1030), der an dem Gehäuse (102) angebracht ist, wobei der Positionierer (1030) dafür konfiguriert ist, sowohl die Anzeigevorrichtung (10) als auch den Freiform-Oberflächenspiegel (30) zu positionieren und zu halten, wobei
der Positionierer (1030) Halterungen (21) zum Positionieren und Halten der Anzeigevorrichtung (10) und eine Spiegelhalterung (31) zum Positionieren und Halten des Freiform-Oberflächenspiegels (30) umfasst, so dass der Freiform-Oberflächenspiegel (30) von dem Positionierer (1030) ohne eine Änderung der relativen Positionen des Bilderzeugungsabschnitts (13), der Lichtquelle (11) und des optischen Elements (200) abnehmbar ist.

2. Projektionsvorrichtung (100) nach Anspruch 1, die ferner einen durchlässigen Körper (104) umfasst, der so angeordnet ist, dass er eine Öffnung des Gehäuses (102) abdeckt, um das von dem Freiform-Oberflächenspiegel (30) reflektierte Licht durchzulassen.

3. Projektionsvorrichtung (100) nach Anspruch 2,
wobei in dem durchlässigen Körper (104) ein Abstand zwischen einer Außenfläche und einer Innenfläche zwischen einem Abschnitt und einem anderen Abschnitt innerhalb eines Bereichs, der das von dem Freiform-Oberflächenspiegel (30) reflektierte Licht durchlässt, unterschiedlich ist.

4. Projektionsvorrichtung (100) nach Anspruch 2 oder 3,
wobei ein Teil einer Innenfläche des durchlässigen Körpers (104) nach unten konvex ist.

5. Projektionsvorrichtung (100) nach Anspruch 3 oder 4,
wobei ein Teil einer Innenfläche des durchlässigen Körpers (104) eine Freiform aufweist.

6. Projektionsvorrichtung (100) nach einem der Ansprüche 2 bis 5,
wobei der durchlässige Körper (104) aus Harzmaterial hergestellt ist.

7. Anzeigesystem (11), das Folgendes umfasst:
die Projektionsvorrichtung (100) nach einem der Ansprüche 1 bis 6; und
einen Reflektor (50), der dafür konfiguriert ist, das von dem Freiform-Oberflächenspiegel (30) reflektierte Licht zu reflektieren,
wobei der Freiform-Oberflächenspiegel (30) dafür konfiguriert ist, das Licht zu emittieren und ein virtuelles Bild des Lichts auf dem Reflektor (50) zu bilden.

8. Mobiles Objekt (1A), das das Anzeigesystem (1) nach Anspruch 7 umfasst,
wobei der Reflektor (50) eine Windschutzscheibe ist, die das von dem Freiform-Oberflächenspiegel (30) reflektierte Licht reflektiert.

## Revendications

1. Appareil de projection (100), configuré pour être disposé à l'intérieur d'un tableau de bord, l'appareil de projection (100) comprenant :
un dispositif d'affichage (10) comprenant :
une source lumineuse (11) configurée pour émettre de la lumière ;
une section de formation d'image (13) configurée pour recevoir la lumière émise par la source lumineuse et émettre la lumière pour former une image ; et
un élément optique (200) configuré pour faire diverger la lumière émise depuis la section de formation d'image (13) ; et
un miroir de surface de forme libre (30) configuré pour recevoir la lumière divergente, et pour réfléchir la lumière divergente de l'image et former une autre image ; et
un logement (102) configuré pour loger le dispositif d'affichage (10) et le miroir de surface de forme libre (30), et pour émettre la lumière réfléchie par le miroir de surface de forme libre (30) ;
**caractérisé en ce que** l'appareil de projection (100) comprend en outre :
un positionneur (1030) fixé au logement (102), le positionneur (1030) étant configuré pour positionner et maintenir chacun parmi le dispositif d'affichage (10) et le miroir de surface de forme libre (30), dans lequel
le positionneur (1030) comprend des supports (21) pour positionner et maintenir le dispositif d'affichage (10) et un support de miroir (31) pour positionner et maintenir le miroir de surface de forme libre (30), de sorte que le miroir de surface de forme libre (30) est détachable du positionneur (1030) sans modification des positions relatives de la section de formation d'image (13), de la source lumineuse (11) et de l'élément optique (200).

2. Appareil de projection (100) selon la revendication 1, comprenant en outre un corps transmissif (104) disposé pour recouvrir une ouverture du logement (102) de manière à transmettre la lumière réfléchie par le miroir de surface de forme libre (30).

3. Appareil de projection (100) selon la revendication 2,
dans lequel, dans le corps transmissif (104), une distance entre une surface extérieure et une surface intérieure diffère entre une partie et une autre partie à l'intérieur d'une zone qui transmet la lumière réfléchie par le miroir de surface de forme libre (30).

4. Appareil de projection (100) selon la revendication 2 ou 3,
dans lequel une partie d'une surface intérieure du corps transmissif (104) est convexe vers le bas.

5. Appareil de projection (100) selon la revendication 3 ou 4,
dans lequel une partie d'une surface intérieure du corps transmissif (104) a une forme libre.

6. Appareil de projection (100) selon l'une quelconque des revendications 2 à 5,
dans lequel le corps transmissif (104) est constitué d'un matériau en résine.

7. Système d'affichage (11) comprenant :
l'appareil de projection (100) selon l'une quelconque des revendications 1 à 6 ; et
un réflecteur (50) configuré pour réfléchir la lumière réfléchie par le miroir de surface de forme libre (30),
dans lequel le miroir de surface de forme libre (30) est configuré pour émettre la lumière et former une image virtuelle de la lumière sur le réflecteur (50).

8. Objet mobile (1A) comprenant le système d'affichage (1) selon la revendication 7,
dans lequel le réflecteur (50) est un pare-brise qui réfléchit la lumière réfléchie par le miroir de surface de forme libre (30).
